# EUROPÄISCHE PATENTSCHRIFT

(11) **EP 3 339 192 B1**
(45) Veröffentlichungstag und Bekanntmachung des Hinweises auf die Patenterteilung: **06.03.2019**
(21) Anmeldenummer: 16205612.1
(22) Anmeldetag: 21.12.2016
(51) Int. Cl.: B65B 35/58, B65G 47/244, B65G 47/28, B65G 47/29, B65G 47/32, B65B 35/16, B65B 35/36

(54) **VERFAHREN ZUM ÜBERGEBEN VON BLISTERPACKUNGEN**
METHOD FOR TRANSFERRING BLISTER PACKS
PROCÉDÉ POUR LE TRANSFERT D'EMBALLAGES BLISTER

(43) Veröffentlichungstag der Anmeldung: 27.06.2018
(73) Patentinhaber: UHLMANN PAC-SYSTEME GmbH & Co. KG, 88471 Laupheim (DE)
(72) Erfinder: HÄHNEL, Bernd, 76297 Stutensee (DE)
(74) Vertreter: Wächter, Jochen

(56) Entgegenhaltungen:
- EP-A1- 1 308 388
- WO-A1-2014/181307

## Beschreibung

Die vorliegende Erfindung betrifft ein Verfahren zum Übergeben von Blisterpackungen an eine Fördervorrichtung.

Zur Verpackung von medizinischen oder pharmazeutischen Produkten werden häufig Blisterpackungen verwendet. Bei der Herstellung von Blisterpackungen werden in eine Formfolie Näpfe für die medizinischen oder pharmazeutischen Produkte eingeformt, die Produkte in diese Näpfe eingefüllt und die Näpfe gegebenenfalls anschließend mit einer Deckfolie versiegelt. Die Blisterpackungen können auch als Klemmpackungen ausgebildet sein, in die die Produkte eingeklemmt werden, sodass eine Versiegelung mit einer Deckfolie nicht zwingend erforderlich ist. Eine Maschine zum Herstellen und Befüllen von Blisterpackungen umfasst folglich in der Regel eine Formstation zum Formen der Näpfe in die bahnförmige Formfolie, eine Füllstation zum Befüllen der Näpfe mit den medizinischen oder pharmazeutischen Produkten, meistens eine Siegelstation zum Versiegeln der Näpfe mit einer Deckfolie, sowie eine Stanzstation zum Ausstanzen einzelner Blisterpackungen aus dem bahnförmigen Material. Nach dem Ausstanzen liegen einzelne Blisterpackungen vor, die üblicherweise anschließend einzeln oder stapelweise verpackt werden, meist in Faltschachteln.

Im Verlauf dieser Produktionskette können die Blisterpackungen nach dem Stanzvorgang am Ausgang der Stanzvorrichtung in verschiedenen Konfigurationen bereitgestellt werden, z.B. stationär in einem Blisterpackungsmagazin oder bewegt auf einer Fördervorrichtung. Die Anzahl der Blisterpackungen, die nebeneinander quer zur Förderrichtung angeordnet sind, hängt dabei von den Randbedingungen ab, u.a. von den Abmessungen der Blisterpackungen. Der Verpackungseinheit sind die Blisterpackungen in den meisten Fällen einbahnig zuzuführen. Bei einer mehrbahnigen Anordnung der Blisterpackungen am Ausgang der Stanzvorrichtung und einer einbahnigen Anordnung der Blisterpackungen in der Verpackungseinheit werden somit Übergabevorrichtungen benötigt, die für das Zusammenführen der Blisterpackungen auf eine Bahn sorgen.

US 8,776,984 B2 beschreibt eine Vorrichtung und ein Verfahren zum Übergeben von Blisterpackungen, die auf mehreren Bahnen herangefördert werden. Die Übergabevorrichtung umfasst einen Drei-Achsen-Roboter, der mehrere Reihen von Greifelementen umfasst. Die Anzahl der Reihen von Greifelementen entspricht dabei der Anzahl an Bahnen von Blisterpackungen, die am Ausgang der Stanzvorrichtung bereitgestellt werden. Beispielsweise nimmt der Roboter drei Reihen von Blisterpackungen auf, verfährt eine erste Reihe davon über eine einbahnige Fördervorrichtung der Verpackungsmaschine, bewegt diese erste Reihe von Blisterpackungen mit der Fördervorrichtung mit und legt dann diese erste Reihe auf der Fördervorrichtung ab. Anschließend verfährt der Roboter derart, dass die nächste Reihe von Blisterpackungen mit der Fördervorrichtung mitbewegt wird. Dabei ist die zweite Reihe vorzugsweise über den Blisterpackungen der zuvor abgelegten ersten Reihe angeordnet. So werden Stapel von Blisterpackungen gebildet, wenn der Roboter die zweite Reihe von Blisterpackungen auf der Fördervorrichtung ablegt. Dies wird für jede weitere Reihe von Blisterpackungen wiederholt. Anschließend verfährt der Roboter zurück in die Stellung, in der er erneut Blisterpackungen aufnehmen kann.

Für derartige Übergabevorrichtungen wird ein mehrachsig zu verfahrender Roboter benötigt, der verhältnismäßig teuer in der Anschaffung ist und der derart anzusteuern ist, dass er sich sowohl bei der Produktaufnahme als auch bei der Produktabgabe mit dem jeweiligen Fördermittel mitbewegt. Eine derartige Steuerung ist verhältnismäßig aufwändig und fehler-anfällig.

EP 1 308 388 A1 offenbart ein Verfahren zum Übertragen von Blisterpackungen und dergleichen von einer Schneidestation auf das Zuführband einer Verpackungsmaschine, wobei eine an einer Schneidestation linienförmig angeordnete Reihe von Blisterpackungen aufgenommen und unter Ausrichtung bezüglich Aufnahme- und Bewegungsmitteln, die sich in einer Vorwärtsbewegungsrichtung bewegen, angeordnet wird.

WO 2014/181307 A1 offenbart ein Verfahren zum Verpacken von in wenigstens zwei Reihen angeordneten Blisterverpackungen.

Der vorliegenden Erfindung liegt daher die Aufgabe zugrunde, ein Verfahren zum Übergeben von Blisterpackungen zu schaffen, das den Übergabevorgang vereinfacht und einen hohen Durchsatz gewährleistet.

Diese Aufgabe wird durch die Merkmale des Anspruchs 1 gelöst.

Erfindungsgemäß umfasst ein Verfahren zum Übergeben von Blisterpackungen an eine Fördervorrichtung folgende Schritte:
a) Bereitstellen einer Mehrzahl von Blisterpackungen in einem stationären Aufnahmebereich, in dem die Mehrzahl von Blisterpackungen in einer Querrichtung, die sich quer zu einer Förderrichtung der Fördervorrichtung erstreckt, nebeneinander angeordnet ist;
b) Aufnehmen der Mehrzahl von Blisterpackungen mit einer ersten Übergabeeinrichtung im Aufnahmebereich;
c) gemeinsames Bewegen der Mehrzahl von Blisterpackungen mittels der ersten Übergabeeinrichtung vom Aufnahmebereich in einen stationären Ablagebereich;
d) gemeinsames Drehen der Mehrzahl von Blisterpackungen um eine Drehachse, die senkrecht zur Förderrichtung und zur Querrichtung ausgerichtet ist, während des Bewegens der Mehrzahl von Blisterpackungen vom Aufnahmebereich in den Ablagebereich;
e) Ablegen der Mehrzahl von Blisterpackungen im Ablagebereich auf einer Zwischenablage;
f) Anordnen einer Blisterpackung aus der Mehrzahl von Blisterpackungen in einer stationären Aufnahmeposition;
g) Aufnehmen der sich in der Aufnahmeposition befindenden Blisterpackung mit einer zweiten Übergabeeinrichtung;
h) Bewegen der aufgenommenen Blisterpackung mittels der zweiten Übergabeeinrichtung von der Aufnahmeposition in eine stationäre Ablageposition;
i) Ablegen der bewegten Blisterpackung in der Ablageposition auf die Fördervorrichtung; und
j) Wiederholen der Schritte f) bis i) für jede weitere aus der Mehrzahl von Blisterpackungen, wobei das Anordnen der Blisterpackungen gemäß Schritt f) jeweils durch Bewegen der Zwischenablage in einer Längsrichtung, die sich parallel zur Förderrichtung der Fördervorrichtung erstreckt, erfolgt.

Auf diese Weise kann die Übergabe von Blisterpackungen an eine einbahnige Fördervorrichtung sehr einfach erfolgen. Insbesondere ermöglicht das Verfahren, dass eine Übergabevorrichtung mechanisch und kinematisch einfach gestaltet und folglich kostengünstig umgesetzt werden kann. Dies ist vor allem durch die stationäre Anordnung der Blisterpackungen im Aufnahme- und Ablagebereich sowie in der Aufnahme- und Ablageposition bedingt, in denen die Blisterpackungen jeweils von der ersten bzw. der zweiten Übergabeeinrichtung aufgenommen und abgelegt werden. "Stationär" bedeutet dabei, dass die Blisterpackungen zum Zeitpunkt der Aufnahme bzw. Ablage nicht bewegt werden. Es ist daher ausreichend, dass die erste und die zweite Übergabeeinrichtung zwischen jeweils zwei definierten, ortsfesten Positionen bewegbar sind. Hierfür genügt es beispielsweise, die erste und die zweite Übergabeeinrichtung jeweils um eine Achse rotatorisch anzutreiben. Ein Antrieb in alle drei Raumrichtungen ist ebenso wenig notwendig wie eine Synchronisierung der Übergabeeinrichtungen mit den Transportgeschwindigkeiten von vorangehenden oder nachlaufenden Fördervorrichtungen. Zudem wird durch das Drehen der Blisterpackungen gemäß Schritt d) zugleich erreicht, dass die Blisterpackungen bereits derart ausgerichtet an die Fördervorrichtung übergeben werden, dass sie für das Einschieben der Blisterpackungen in Faltschachteln geeignet sind. Ebenso ermöglicht das Verfahren das Stapeln der Blisterpackungen auf der Fördervorrichtung.

Vorzugsweise erfolgt das Anordnen einer Blisterpackung gemäß Schritt f) auch bei der ersten der Mehrzahl von Blisterpackungen durch Bewegen der Zwischenablage in Längsrichtung. Die Zwischenablage kann sich bereits in Längsrichtung bewegen, während sich die erste Übergabeeinrichtung noch in unmittelbarer Nähe befindet. Somit wird die erste Blisterpackung früher für die zweite Übergabeeinrichtung zugänglich.

Es ist bevorzugt, dass die Fördervorrichtung während des Wiederholens der Schritte f) bis i) für zumindest eine weitere aus der Mehrzahl von Blisterpackungen stillsteht, so dass auf der Fördervorrichtung ein Stapel von Blisterpackungen gebildet wird. Die Bildung von Stapeln von Blisterpackungen ist im Hinblick auf die nachfolgende Verpackung dieser Stapel in Faltschachteln besonders wünschenswert.

Vorzugsweise erfolgt das Bereitstellen der Mehrzahl von Blisterpackungen im stationären Aufnahmebereich gemäß Schritt a) durch eine Zuführvorrichtung, mehr bevorzugt durch ein getaktet betriebenes Förderband. Ein solches ist für den Transport der Blisterpackungen besonders geeignet und lässt sich gut in den Gesamtaufbau der Maschine integrieren. Alternativ ist es denkbar, das Förderband kontinuierlich zu betreiben. Dabei ist es vorteilhaft, entsprechende Mittel, wie z.B. eine Halteeinrichtung, vorzusehen, die die Blisterpackungen im stationären Aufnahmebereich halten. Für den Fachmann ergibt sich zudem aus der jeweils vorliegenden Gestalt der Maschine eine Reihe von weiteren Möglichkeiten zur Bereitstellung der Blisterpackungen, wie z.B. die Bereitstellung in einem Magazin, in das die Blisterpackungen nach dem Stanzen überführt werden.

Vorzugsweise sind die Zuführvorrichtung und die Fördervorrichtung in Längsrichtung zueinander ausgerichtet, sodass die erste Übergabeeinrichtung, die Zwischenablage und die zweite Übergabeeinrichtung die Mehrzahl von Blisterpackungen nach dem Drehen der Mehrzahl von Blisterpackungen gemäß Schritt d) ohne Versatz in Querrichtung bewegen. Dies ermöglicht zum einen, dass die gesamte Anordnung zum Übergeben der Blisterpackungen in Querrichtung wenig Bauraum beansprucht. Zum anderen können die erste und die zweite Übergabeeinrichtung konstruktiv einfach ausgebildet werden, wenn kein zusätzlicher Versatz in der Querrichtung zu erfolgen hat. Auch die Steuerung der ersten und der zweiten Übergabeeinrichtung wird dadurch vereinfacht.

Es ist bevorzugt, dass die erste und die zweite Übergabeeinrichtung als Greifer oder als Saugvorrichtungen ausgebildet sind. Die Ausbildung der Übergabeeinrichtungen als Greifer bietet dabei den Vorteil, dass die Greifer Blisterpackungen unabhängig von der Oberflächenbeschaffenheit ergreifen können, wenn sie seitlich an den Rändern der Blisterpackungen angreifen. Insbesondere können mit Greifern auch solche Blisterpackungen gut aufgenommen werden, die z.B. als Klemmpackungen ausgebildet sind und nicht mit einer Deckfolie versiegelt sind. Saugvorrichtungen bieten hingegen den Vorteil, dass sie relativ unabhängig von den Außenmaßen der Blisterpackungen einsetzbar sind und ohne Änderung verschiedene Formate von Blisterpackungen aufnehmen können.

Die Mehrzahl von Blisterpackungen ist vorzugsweise im Aufnahmebereich derart angeordnet, dass sich die Blisterpackungen in der Längsrichtung mindestens genauso weit erstrecken wie in Querrichtung. Weiter ist es bevorzugt, dass die Mehrzahl von Blisterpackungen im Ablagebereich derart angeordnet ist, dass sich die Blisterpackungen in Querrichtung mindestens genauso weit erstrecken wie in Längsrichtung. Das Drehen der Mehrzahl von Blisterpackungen gemäß Schritt d) umfasst vorzugsweise eine Drehung der Mehrzahl von Blisterpackungen um 90° bzw. 270° um die Drehachse. Dadurch wird insgesamt erreicht, dass Blisterpackungen, die so ausgestanzt werden, dass sie sich in Längsrichtung mindestens genauso weit erstrecken wie in Querrichtung, während der Übergabe an die Fördervorrichtung derart gedreht werden, dass sie sich zum späteren Einschieben in Faltschachteln eignen. Das Einschieben der Blisterpackungen in Faltschachteln erfolgt üblicherweise in Querrichtung. Ein Einschubmechanismus greift dabei an einer Schmalseite der Blisterpackungen an und schiebt diese in Querrichtung in eine bereitgestellte Faltschachtel. Es versteht sich, dass der Winkel, um den die Blisterpackungen gedreht werden, an die jeweiligen Gegebenheiten angepasst werden kann.

Das Bewegen der Zwischenablage gemäß Schritt f) erfolgt vorzugsweise durch eine Antriebseinrichtung. Die Antriebseinrichtung umfasst bevorzugt einen Riemenantrieb. Dieser stellt ein besonders geeignetes Mittel zum Antrieb der Zwischenablage dar und lässt sich einfach in die Maschine integrieren. Vorzugsweise umfasst der Riemenantrieb einen Zahnriemen, der mit einem entsprechenden Gegenelement an der Zwischenablage in Eingriff steht. Dabei ist es besonders vorteilhaft, wenn der Riemenantrieb derart ausgebildet ist, dass er unabhängig vom Format der Zwischenablage einsetzbar ist.

Es ist besonders bevorzugt, dass sich die erste Übergabeeinrichtung im Wesentlichen auf einer Kreisbahn bewegt, deren Mittelachse vorzugsweise parallel zur Querrichtung ausgerichtet ist. Weiter bevorzugt ist es, dass die Bewegung der ersten Übergabeeinrichtung auf der Kreisbahn mit der Drehbewegung der Mehrzahl von Blisterpackungen gemäß Schritt d) derart gekoppelt ist, dass die Bewegung der ersten Übergabeeinrichtung auf der Kreisbahn die Drehbewegung der Mehrzahl von Blisterpackungen gemäß Schritt d) bewirkt. Dies ermöglicht eine weitere Vereinfachung des Übergabeverfahrens sowie der Anordnung zum Übergeben von Blisterpackungen. Vor allem ist in diesem Fall nur ein Antrieb notwendig, um sowohl die Bewegung der ersten Übergabeeinrichtung auf einer Kreisbahn als auch die Drehbewegung der Mehrzahl von Blisterpackungen gemäß Schritt d) zu erzeugen. Durch eine entsprechende Zwangsführung bedarf es auch keiner aufwändigen Steuerung der einzelnen Komponenten. Die Bewegung der ersten Übergabeeinrichtung auf einer Kreisbahn hat weiterhin den Vorteil, dass die Blisterpackungen in Längsrichtung vorwärtsbewegt werden, während sie unmittelbar über dem Aufnahme- und Ablagebereich senkrecht zur Längsrichtung und senkrecht zur Querrichtung bewegt werden. Dadurch wird es möglich, die Blisterpackungen z.B. in entsprechende Ausnehmungen in der Zwischenablage von oben einzusetzen.

Es ist weiter bevorzugt, dass sich auch die zweite Übergabeeinrichtung im Wesentlichen auf einer Kreisbahn bewegt, deren Mittelachse vorzugsweise parallel zur Querrichtung ausgerichtet ist. Dadurch werden die Blisterpackungen ebenfalls weiter in Längsrichtung bewegt. Zudem können die Blisterpackungen in der Aufnahmeposition aus den Ausnehmungen in der Zwischenablage entnommen werden und in der Ablageposition in entsprechende Abteile oder sonstige Aufnahmen der Fördervorrichtung abgelegt werden.

Schließlich ist es bevorzugt, dass sich die Zwischenablage nach Schritt j) zurück zum Aufnahmebereich bewegt, um eine neue Mehrzahl von Blisterpackungen aufzunehmen. Mit diesem Schritt wird die Voraussetzung für einen neuen Übergabezyklus geschaffen und das Verfahren kann erneut durchlaufen werden.

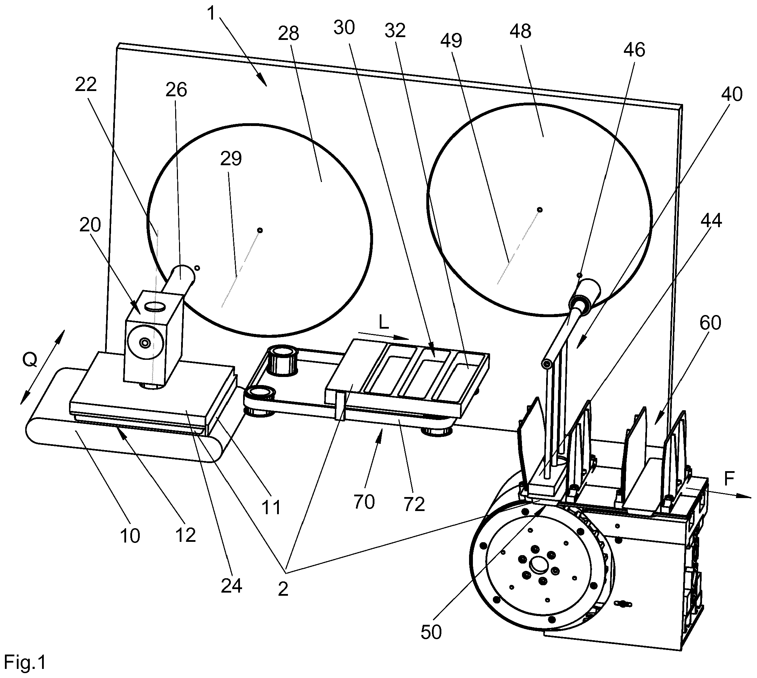

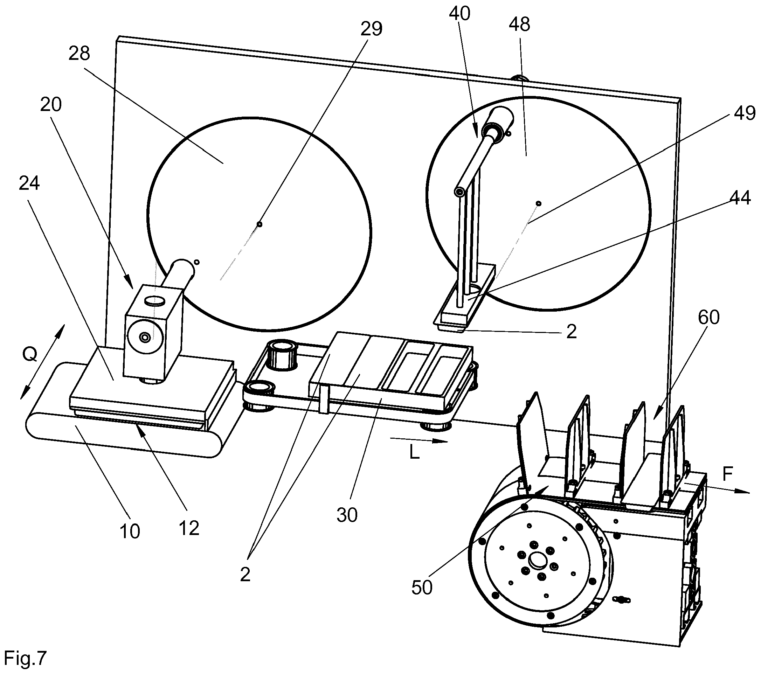

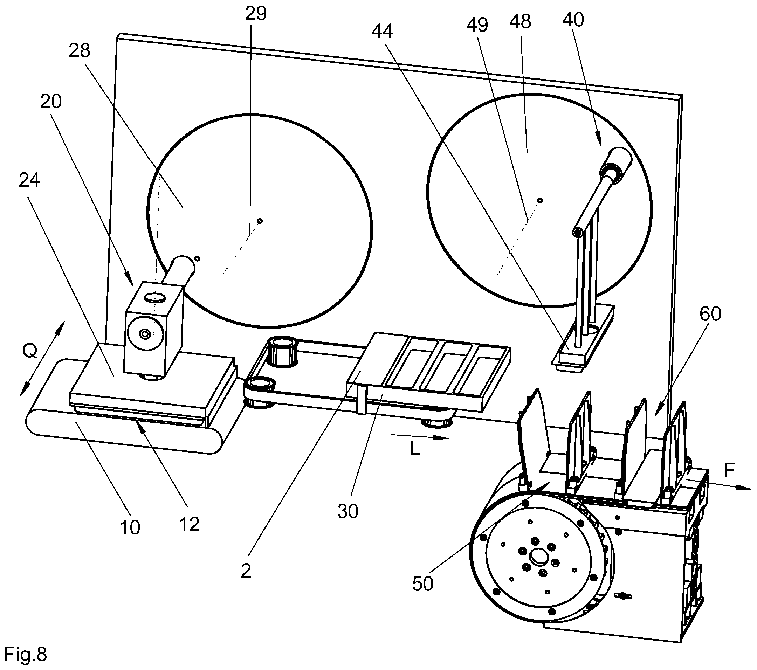

- Fig. 1 bis 10: zeigen einzelne Schritte des erfindungsgemäßen Verfahrens zum Übergeben von Blisterpackungen anhand einer möglichen Ausführungsform einer Einheit zum Übergeben von Blisterpackungen.

Fig. 1 zeigt eine beispielhafte Ausführungsform einer Einheit 1 zum Übergeben von Blisterpackungen 2 von einer Zuführvorrichtung 10 an eine Fördervorrichtung 60 zur Umsetzung des erfindungsgemäßen Verfahrens. Die Einheit 1 umfasst eine erste Übergabeeinrichtung 20, eine Zwischenablage 30 und eine zweite Übergabeeinrichtung 40, die in dieser Reihenfolge zwischen der Zuführvorrichtung 10 und der Fördervorrichtung 60 angeordnet sind.

Die Zuführvorrichtung 10 ist der Einheit 1 zum Übergeben von Blisterpackungen 2 in Förderrichtung vorgelagert. Die Zuführvorrichtung 10 dient dem Bereitstellen der Blisterpackungen 2 zur anschließenden Übergabe durch die Einheit 1. In der dargestellten Ausführungsform ist die Zuführvorrichtung 10 als Förderband ausgebildet, das vorzugsweise getaktet betrieben wird. Ein getaktet betriebenes Förderband eignet sich besonders zur Integration in eine Maschine, in der das Förderband beispielsweise am Ausgang der Stanzstation beginnt und die Blisterpackungen 2 bis zur Einheit 1 transportiert. Es versteht sich, dass statt der Zuführvorrichtung 10 alternative Mittel vorgesehen werden können. Insbesondere ist die Verwendung eines kontinuierlich betriebenen Förderbands denkbar. Auf der Zuführvorrichtung sind die Blisterpackungen 2 in einer Querrichtung Q nebeneinander angeordnet. Die Querrichtung Q erstreckt sich dabei quer zu einer Förderrichtung F der Fördervorrichtung 60. Üblicherweise sind mindestens zwei Blisterpackungen 2 in einer Rehe nebeneinander auf der Zuführvorrichtung 10 angeordnet. Beispielhaft sind vier Blisterpackungen 2 in Querrichtung Q nebeneinander abgebildet. Die Anzahl der Blisterpackungen 2, die in Querrichtung Q nebeneinander angeordnet sind, kann an die vorliegenden Gegebenheiten angepasst werden. Dies hängt insbesondere von den Abmessungen der Blisterpackungen 2 sowie der Blisterbahn ab, aus der die einzelnen Blisterpackungen 2 ausgestanzt werden.

Es ist ein stationärer Aufnahmebereich 12 definiert, in dem die Blisterpackungen 2 zur Aufnahme durch eine erste Übergabeeinrichtung 20 bereitgestellt werden. Der Aufnahmebereich 12 umfasst den Bereich, in dem sich die in Querrichtung Q nebeneinander angeordnete Mehrzahl von Blisterpackungen 2 unmittelbar vor der Aufnahme durch die erste Übergabeeinrichtung 20 befindet. Um die Mehrzahl von Blisterpackungen 2 in dem stationären Aufnahmebereich 12 anzuordnen, kann eine Halteeinrichtung 11 vorgesehen sein. Die Halteeinrichtung 11 ist beispielsweise als ein Anschlag ausgebildet, unter dem das Förderband der Zuführvorrichtung 10 hindurchlaufen kann, während die Blisterpackungen 2 im Aufnahmebereich 12 stationär zurückgehalten werden. Die Halteeinrichtung gewährleistet beim kontinuierlichen Betrieb des Förderbands das zuverlässige und präzise Anordnen der Blisterpackungen 2 im Aufnahmebereich 12.

In der dargestellten Ausführungsform umfasst die erste Übergabeeinrichtung 20 eine erste Greifeinrichtung 24, die dazu geeignet ist, eine Mehrzahl von Blisterpackungen 2 zeitgleich aufzunehmen und zu bewegen. Hierfür kann die erste Greifeinrichtung 24 einzelne Greifer für jede Blisterpackung 2 der Mehrzahl von Blisterpackungen 2 umfassen. Alternativ ist auch ein Greifer denkbar, der dazu geeignet ist, mehrere Blisterpackungen zugleich zu greifen. Die Greifer ergreifen die Blisterpackungen 2 üblicherweise an deren Randbereichen. Anstelle von Greifern können auch Saugvorrichtungen verwendet werden. Die Saugvorrichtungen saugen sich mittels Unterdruck oder Vakuum an eine Oberfläche der Blisterpackungen 2 an und stellen auf diese Weise eine kraftschlüssige Verbindung zu den Blisterpackungen 2 her.

Die erste Übergabeeinrichtung 20 umfasst weiter einen ersten Arm 26, an dessen freiem Ende die erste Greifeinrichtung 24 angeordnet ist. An dem der ersten Greifeinrichtung 24 gegenüberliegenden Ende des ersten Arms 26 ist dieser vorzugsweise in einer ersten Drehscheibe 28 und im Maschinengestell gelagert. Die erste Drehscheibe 28 ist um eine erste Mittelachse 29 drehbar im Maschinengestell gelagert. Ein erster Antrieb treibt die erste Drehscheibe 28 um die erste Mittelachse 29 rotatorisch an. In einer besonders bevorzugten Ausführungsform bewirkt die Drehung der ersten Drehscheibe 28 um die erste Mittelachse 29 eine Drehung des ersten Arms 26 um dessen Längsachse, die sich parallel zur ersten Drehachse 29 erstreckt. Die Drehung des ersten Arms 26 um dessen Längsachse wird wiederum in eine Drehung der ersten Greifeinrichtung 24 um eine Drehachse 22 übersetzt, die sich senkrecht zur Längsrichtung L und senkrecht zur Querrichtung Q erstreckt. Weiterhin ist die erste Übergabeeinrichtung 20 derart gelagert, dass die Drehachse 22 bei der Drehung der ersten Drehscheibe 28 und der ersten Greifeinrichtung 24 um die erste Mittelachse 29 stets senkrecht zur Längsrichtung L und senkrecht zur Querrichtung Q ausgerichtet ist. Vorzugsweise ist dadurch die Ebene, in der die Blisterpackungen 2 in der ersten Greifeinrichtung 24 angeordnet sind, parallel zu der Ebene, in der die Blisterpackungen 2 im Aufnahmebereich 12 angeordnet sind.

Die Zwischenablage 30 ist in Längsrichtung L zwischen der ersten Übergabeeinrichtung 20 und der zweiten Übergabeeinrichtung 40 angeordnet. Es ist ferner ein stationärer Ablagebereich 14 definiert, in dem die Blisterpackungen 2 von der ersten Übergabeeinrichtung 20 abgelegt werden. Der Ablagebereich 14 umfasst den Bereich, in dem sich die in Längsrichtung L hintereinander angeordnete Mehrzahl von Blisterpackungen 2 unmittelbar nach der Ablage durch die erste Übergabeeinrichtung 20 befindet. Zum Zeitpunkt der Ablage der Mehrzahl von Blisterpackungen 2 befindet sich die Zwischenablage 30 im Ablagebereich 14.

Zum Aufnehmen und Sichern der Blisterpackungen 2 gegen Verrutschen weist die Zwischenablage 30 in der dargestellten Ausführungsform Ausnehmungen 32 auf. Die Ausnehmungen 32 sind vorzugsweise als Gegenstück zu den Blisterpackungen 2 geformt, sodass die Blisterpackungen 2 mit geringem Spiel in den Ausnehmungen 32 aufgenommen werden. Die Anzahl der Ausnehmungen 32 entspricht dabei der Anzahl der aufzunehmenden Blisterpackungen 2, die durch die erste Übergabeeinrichtung 20 zur Zwischenablage 30 bewegt werden. Alternativ zu den Ausnehmungen 32 können auch andere Mittel vorgesehen werden, um die Blisterpackungen 2 gegen ein Verrutschen auf der Zwischenablage 30 zu sichern. Denkbar sind dabei z.B. vereinzelte oder umlaufende Vorsprünge auf der Oberfläche der Zwischenablage 30. Gegebenenfalls kann es ausreichend sein, die Oberfläche der Zwischenablage 30 derart auszubilden, dass eine reibschlüssige Verbindung zwischen der Zwischenablage 30 und den Blisterverpackungen 2 besteht. Dies kann beispielsweise durch eine gummierte Oberfläche erreicht werden. In jedem Fall ist sicherzustellen, dass die Blisterpackungen 2 gegen vibrationsbedingtes oder beschleunigungsbedingtes Verrutschen gesichert sind.

Die Zwischenablage 30 ist in Längsrichtung L hin- und herbewegbar. Vorzugsweise ist die Zwischenablage 30 ausschließlich in und entgegen der Längsrichtung L bewegbar. Die Bewegung der Zwischenablage 30 in Längsrichtung L wird durch eine Antriebseinrichtung 70 erzeugt. Vorzugsweise umfasst die Antriebseinrichtung 70 einen Riemenantrieb 72, der mehr bevorzugt einen Zahnriemen, eine Antriebs- und mindestens eine Umlenkrolle umfasst. In der dargestellten Ausführungsform umfasst die Antriebseinrichtung 70 einen Riemen, eine Antriebsrolle und drei Umlenkrollen. Der Riemen wird durch die Antriebs- und Umlenkrollen in einem Rechteck aufgespannt, von dem sich zwei Seiten in Querrichtung Q und zwei Seiten Längsrichtung L erstrecken. Die Zwischenablage 30 ist dabei mit mindestens einem der in Längsrichtung L verlaufenden Riemenabschnitte verbunden. Der Riemen und die Zwischenablage 30 können jeweils entsprechende Mittel aufweisen, um miteinander in Eingriff zu stehen. Vorzugsweise lässt sich die Zwischenablage 30 einfach am Riemen einhängen. Für den Fachmann ist eine Vielzahl von alternativen Antriebsmöglichkeiten für die Zwischenablage 30 ersichtlich. So kann die Zwischenablage 30 beispielsweise als Schlitten ausgebildet sein, der durch einen Linearantrieb angetrieben wird. Es können auch hydraulische, pneumatische oder mechanische Antriebe verwendet werden. Die Antriebseinrichtung 70 und die Zwischenablage 30 sind jedoch vorteilhafter Weise derart miteinander verbunden, dass die Verbindung schnell und vorzugsweise manuell gelöst werden kann. Dies bietet den Vorteil, dass bei einem Wechsel des Formats oder der Ausrichtung der Blisterpackungen 2 die Zwischenablage 30 schnell ausgewechselt werden kann, ohne einen längeren Stillstand der Maschine herbeizuführen. Auf diese Weise können für verschiedene Formate und Ausrichtungen der Blisterpackungen 2 geeignete Zuführvorrichtungen 30 vorgesehen werden, ohne dass sich ein Wechsel erheblich auf die Leistung der Anordnung 1 zur Übergabe von Blisterpackungen 2 auswirkt.

Die zweite Übergabeeinrichtung 40 ist in Längsrichtung L versetzt zur ersten Übergabeeinrichtung 20 angeordnet. Die zweite Übergabeeinrichtung 40 umfasst eine zweite Greifeinrichtung 44, die dazu geeignet ist, eine einzelne Blisterpackung 2 aufzunehmen und zu bewegen. Auch die zweite Greifeinrichtung 44 kann alternativ als Saugvorrichtung ausgebildet sein. Die Position, in der sich eine Blisterpackung 2 zum Zeitpunkt der Aufnahme durch die zweite Übergabeeinrichtung 40 befindet, ist als Aufnahmeposition 38 definiert. Die Zwischenablage 30 wird so bewegt, dass die Aufnahmeposition 38 für jede Blisterpackung stationär bleibt.

Weiterhin umfasst die zweite Übergabeeinrichtung 40 einen zweiten Arm 46, an dessen freiem Ende die zweite Greifeinrichtung 44 angeordnet ist. Das der zweiten Greifeinrichtung 44 gegenüberliegende Ende des zweiten Arms 46 ist in einer zweiten Drehscheibe 48 und im Maschinengestell gelagert. Die zweite Drehscheibe 48 ist um eine zweite Mittelachse 49 drehbar im Maschinengestell gelagert. Ein zweiter Antrieb treibt die zweite Drehscheibe 48 um die zweite Mittelachse 49 rotatorisch an. Es ist auch denkbar, dass die erste Drehscheibe 28 und die zweite Drehscheibe 48 durch denselben Antrieb angetrieben werden. In diesem Fall wären zwischen dem Antrieb und der jeweiligen Drehscheibe 28, 48 entsprechende Übersetzungen vorzusehen. Die erste Mittelachse 29 und die zweite Mittelachse 49 sind vorzugsweise parallel zueinander und parallel zur Querrichtung Q ausgerichtet.

Die Fördervorrichtung 60 ist schließlich in Längs- bzw. Förderrichtung L, F der zweiten Übergabeeinrichtung 40 nachfolgend angeordnet. Auf der Fördervorrichtung 60 werden die die Blisterpackungen 2 von der zweiten Übergabeeinrichtung 40 abgelegt. Die Position, in der sich eine Blisterpackung 2 zum Zeitpunkt der Ablage auf der Fördervorrichtung 60 durch die zweite Übergabeeinrichtung 40 befindet, ist als Ablageposition 50 definiert. Aufgrund der stationären Anordnung der Fördervorrichtung 60 ist auch die Ablageposition 50 stationär. Die Fördervorrichtung 60 dient dem weiteren Transport der Blisterpackungen 2. Dabei können die Blisterpackungen 2 einzeln oder in Stapeln von mehreren Blisterpackungen 2 transportiert werden. Vorzugsweise erfolgt der Transport durch die Fördervorrichtung 60 zu einer Verpackungsvorrichtung, die die Blisterpackungen 2 z.B. in Faltschachteln verpackt. Die Fördervorrichtung 60 kann dabei als Packgutkette, als Förderband oder als über einen Linearmotor angetriebene Fördervorrichtung ausgebildet sein. Die Fördervorrichtung 60 bewegt die Blisterpackungen 2 kontinuierlich oder getaktet zur Verpackungsstation.

Nachfolgend wird das erfindungsgemäße Verfahren unter Bezugnahme auf die Figuren 1 bis 10 beispielhaft anhand der Anordnung 1 zur Übergabe von Blisterpackungen 2 beschrieben.

Gemäß Fig. 1 wird eine Mehrzahl von Blisterpackungen im stationären Aufnahmebereich 12 bereitgestellt, wobei die Mehrzahl von Blisterpackungen 2 in Querrichtung Q nebeneinander angeordnet ist. Vorliegend befindet sich der Aufnahmebereich 12 auf dem Förderband der Zuführvorrichtung 10. Die Blisterpackungen 2, die sich in Fig. 1 noch in der Zwischenablage 30 und bereits auf der Fördervorrichtung 60 befinden, sind einem vorherigen Übergabezyklus zugehörig. Dies verdeutlicht, dass ein neuer Übergabezyklus bereits beginnen kann, während die Blisterpackungen 2 des vorangehenden Übergabezyklus noch nicht vollständig auf der Fördervorrichtung 60 abgelegt sind. Im stationären Aufnahmebereich 12 wird die Mehrzahl von Blisterpackungen 2 durch die erste Übergabeeinrichtung 20 aufgenommen. Das Aufnehmen der Mehrzahl von Blisterpackungen 2 erfolgt dabei durch Greifen der Blisterpackungen 2 oder Ansaugen der Blisterpackungen 2. Durch die stationäre Anordnung der Blisterpackungen 2 ist das Aufnehmen dieser durch die erste Übergabeeinrichtung 20 besonders einfach, da keine Relativbewegungen oder Relativgeschwindigkeiten zwischen den Blisterpackungen 2 und der ersten Übergabeeinrichtung 20 berücksichtigt werden müssen.

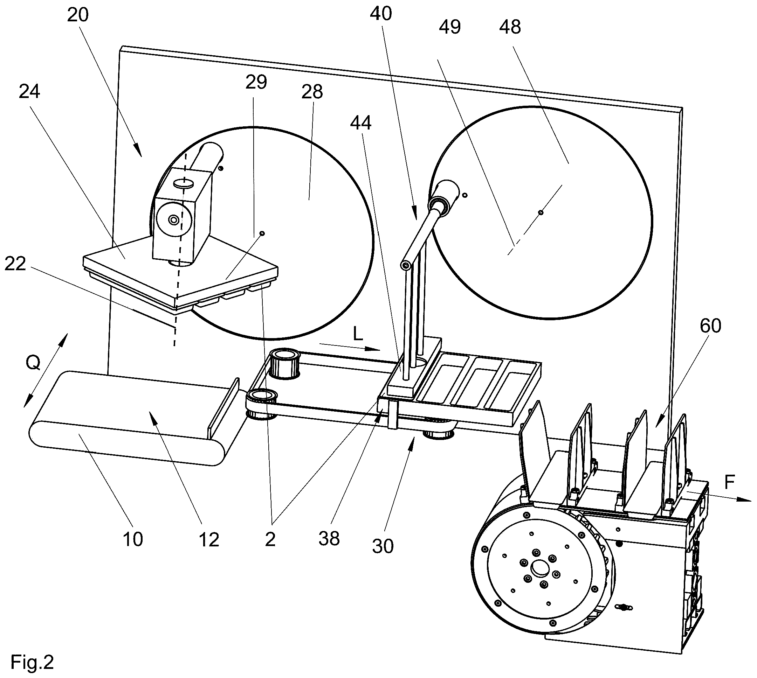

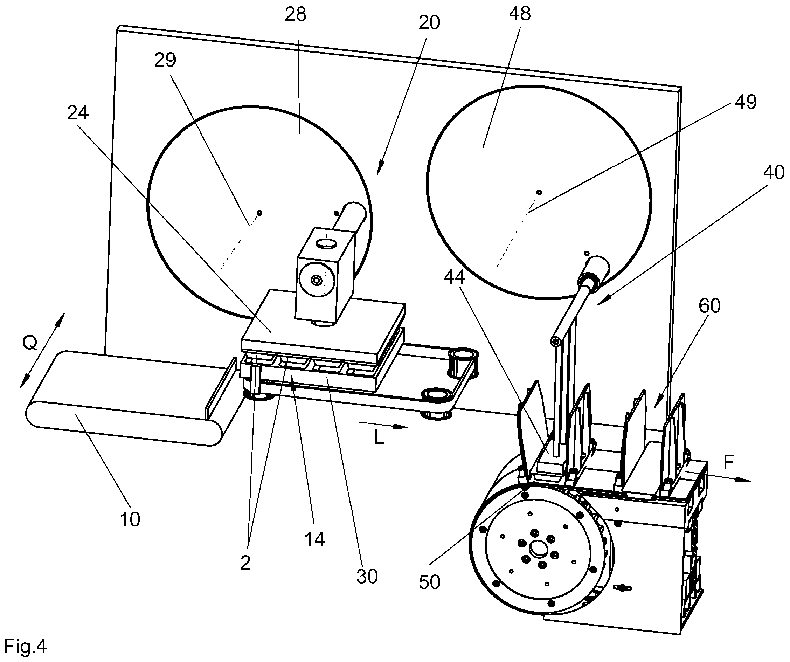

Anschließend wird die Mehrzahl von Blisterpackungen gemeinsam mittels der ersten Übergabeeinrichtung 20 vom Aufnahmebereich 12 (siehe Fig. 1) in einen stationären Ablagebereich 14 (siehe Fig. 4) bewegt. Wie in Fig. 2 zu sehen ist, dreht sich die erste Drehscheibe 28 um die erste Mittelachse 29 derart, dass die erste Übergabeeinrichtung 20 die Blisterpackungen 2 vom Förderband der Zuführvorrichtung 10 anhebt. Es ist ersichtlich, dass bereits in diesem Zustand neue Blisterpackungen 2 im Aufnahmebereich 12 bereitgestellt werden können, sofern eine Kollision mit den Blisterpackungen 2 in der Übergabevorrichtung 20 ausgeschlossen ist.

Aus einer Zusammenschau der Fig. 2, 3 und 4 ist zu erkennen, dass der Aufnahmebereich 12 und der Ablagebereich 14 derart angeordnet sind, dass sie unmittelbar auf dem Bewegungspfad der ersten Übergabeeinrichtung 20 liegen. Aufgrund der Lagerung der ersten Übergabeeinrichtung 20 in der ersten Drehscheibe 28 bewegt sich die erste Übergabeeinrichtung 20 im Wesentlichen auf einer Kreisbahn. Genauer bewegt sich der erste Arm 26 auf einer Kreisbahn.

Während des Bewegens der Mehrzahl von Blisterpackungen 2 vom Aufnahmebereich 12 in den Ablagebereich 14 wird die Mehrzahl von Blisterpackungen 2 um die Drehachse 22 gemeinsam gedreht. Genauer wird der ersten Greifeinrichtung 24 eine Drehbewegung um die Drehachse 22 aufgezwungen. Im dargestellten Beispielsfall werden die Blisterpackungen 2 während des Bewegens vom Aufnahmebereich 12 in den Ablagebereich 14 um 90 Grad um die Drehachse 22 gedreht. Dadurch wird erreicht, dass Blisterpackungen 2, die im Aufnahmebereich 12 in Längsrichtung L ausgerichtet sind, im Ablagebereich 14 in Querrichtung Q ausgerichtet sind. In Längsrichtung L ausgerichtet bedeutet dabei, dass sich die Blisterpackungen 2 in Längsrichtung L mindestens genauso weit erstrecken wie in Querrichtung Q. Analog bedeutet in Querrichtung Q ausgerichtet, dass sich Blisterpackungen 2 in Querrichtung Q mindestens genauso weit erstrecken wir in Längsrichtung L. Die Ausrichtung der Blisterpackungen 2 in Querrichtung Q ist im weiteren Verlauf insbesondere für die Verpackung der Blisterpackungen 2 in Faltschachteln vorteilhaft bzw. in manchen Ausführungsformen von Verpackungsstationen zwingend erforderlich. Es versteht sich, dass der Grad der Drehung der Blisterpackungen 2 um die Drehachse 22 beliebig an die jeweils vorliegenden Umstände angepasst werden kann. Auch die Drehrichtung dieser Drehbewegung ist nach Belieben einstellbar und hängt im Wesentlichen vom Übertragungsmechanismus der Drehbewegung auf die erste Greifeinrichtung 24 ab.

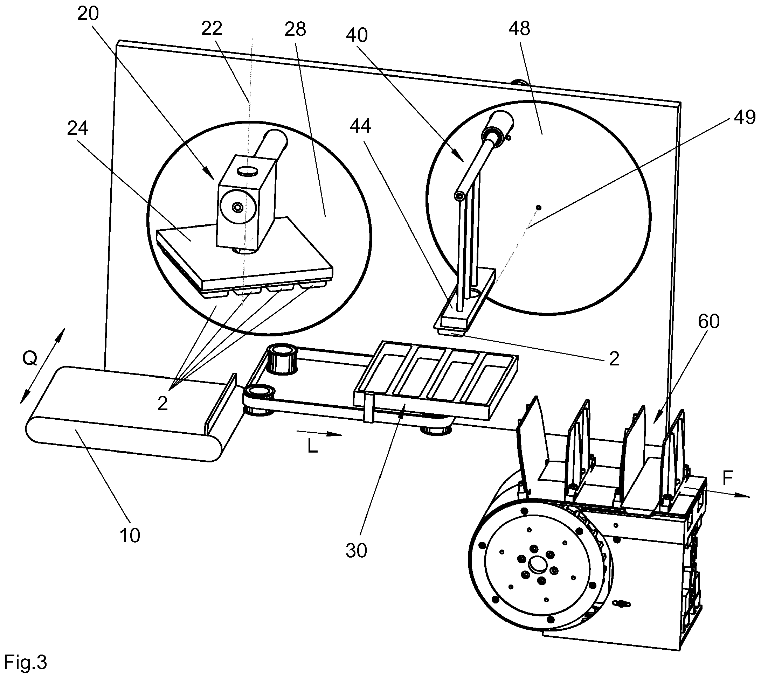

Wie in Fig. 3 zu sehen ist, entnimmt die zweite Übergabeeinrichtung 40 die letzte Blisterpackung 2 aus der Zwischenablage 30, bevor sich die erste Übergabeeinrichtung 20 mit der Mehrzahl von Blisterpackungen 2 dem Ablagebereich 14 annähert. Ist die letzte Blisterpackung 2 aus der Zwischenablage 30 entnommen, bewegt sich die Zwischenablage 30 entgegen der Längsrichtung L in den Ablagebereich 14. Die Bewegungen der ersten Übergabeeinrichtung 20 und der Zwischenablage 30 sind dabei so aufeinander abzustimmen, dass die erste Übergabeeinrichtung 20 mit den Blisterpackungen 2 den Ablagebereich 14 erst erreicht, wenn sich die Zwischenablage 30 ebenfalls im Ablagebereich 14 befindet. Vorzugsweise erfolgt diese Abstimmung derart, dass sich die erste Übergabeeinrichtung 20 kontinuierlich um die erste Mittelachse 29 dreht.

Im Ablagebereich wird die Mehrzahl von Blisterpackungen 2 auf der Zwischenablage 30 abgelegt. Vorzugsweise werden die Blisterpackungen 2 in die Ausnehmungen 32 der Zwischenablage 30 eingefügt. Sind die Blisterpackungen 2 auf der Zwischenablage 30 abgelegt, löst sich die erste Übergabeeinrichtung 20 von der Mehrzahl von Blisterpackungen 2. Die Übergabe durch die erste Übergabeeinrichtung 20 ist damit beendet. Die erste Übergabeeinrichtung 20 bewegt sich nun zumindest so weit zurück um die erste Drehachse 29, dass sie einer weiteren Bewegung der Blisterpackungen 2 mittels der Zwischenablage 30 nicht im Wege steht.

In einer ersten Ausführungsform ist die Zwischenablage 30 derart angeordnet und ausgebildet, dass sich eine erste Blisterpackung 2 im Ablagebereich 14 bereits in einer stationären Aufnahmeposition 38 befindet, sobald die erste Übergabeeinrichtung 20 die Mehrzahl von Blisterpackungen 2 auf der Zwischenablage 30 abgelegt hat und sich die Zwischenablage 30 noch im Ablagebereich 14 befindet. Vorzugsweise ist die erste Blisterpackung 2, die sich in der stationären Aufnahmeposition 38 befindet, die Blisterpackung 2, die in Längsrichtung L der Fördervorrichtung 60 am nächsten ist. Die erste Übergabeeinrichtung 20 ist in diesem Fall zumindest so weit um die erste Mittelachse 29 zurück in Richtung des Aufnahmebereichs 12 zu bewegen, dass zumindest eine Blisterpackung 2 für die zweite Übergabeeinrichtung 40 zugänglich ist.

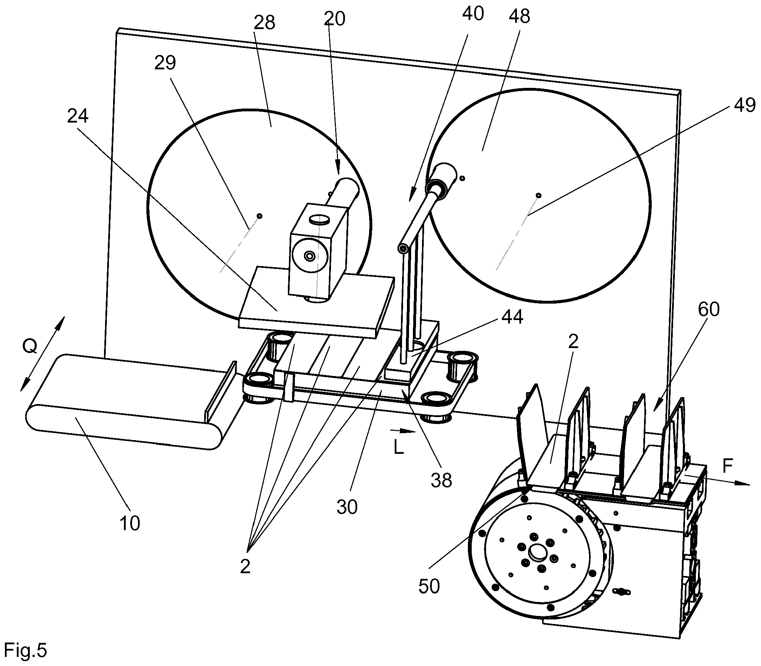

In einer alternativen Ausführungsform, wie in Fig. 5 dargestellt, bewegt sich die Zwischenablage 30 in Längsrichtung L, nachdem die Mehrzahl von Blisterpackungen 2 auf der Zwischenablage 30 abgelegt wurde. Die Bewegung der Zwischenablage 30 erfolgt so weit in Längsrichtung L, bis eine Blisterpackung 2 aus der Mehrzahl von Blisterpackungen in der stationären Aufnahmeposition 38 angeordnet ist. Die dabei zurückzulegende Distanz der Zwischenablage 30 ist beliebig an die gegebenen Umstände in der Maschine anzupassen. In diesem Fall kann sich die erste Übergabeeinrichtung 20 ebenfalls bereits um die erste Mittelachse 29 zurück in Richtung des Aufnahmebereichs 12 bewegen, um einen früheren Zugriff der zweiten Übergabeeinrichtung 40 auf eine Blisterpackung 2 zu ermöglichen. Es ist aber auch möglich, dass die erste Übergabeeinrichtung 20 nach dem Ablegen und Freigeben der Mehrzahl von Blisterpackungen 2 auf der Zwischenablage 30 in dieser Stellung verharrt. Nur die Zwischenablage 30 bewegt sich dann in Längsrichtung L, bis eine Blisterpackung 2 der Mehrzahl von Blisterpackungen 2 für die zweite Übergabeeinrichtung 40 zugänglich ist.

Die sich in der Aufnahmeposition 38 befindende Blisterpackung 2 wird mit der zweiten Übergabeeinrichtung 40 aufgenommen. Anschließend wird die aufgenommene Blisterpackung 2 mittels der zweiten Übergabeeinrichtung 40 von der Aufnahmeposition 38 in die stationäre Ablageposition 50 bewegt. Die Aufnahmeposition 38 und die Ablageposition 50 sind derart angeordnet, dass sie unmittelbar auf dem Bewegungspfad der zweiten Übergabeeinrichtung 40 liegen. Aufgrund der Lagerung der zweiten Übergabeeinrichtung 40 in der zweiten Drehscheibe 48 bewegt sich die zweite Übergabeeinrichtung 40 im Wesentlichen auf einer Kreisbahn. Genauer bewegt sich der zweite Arm 46 auf einer Kreisbahn. Die kreisförmige Bewegung der zweiten Übergabeeinrichtung 40 ist vorteilhaft, da die Blisterpackung 2 zum einen aus einer Ausnehmung 32 der Zwischenablage 30 herausgehoben werden kann. Zum anderen kann die Blisterpackung 2 in Abteile oder Aufnahmen der Fördervorrichtung 60 eingeführt werden. Je nach Ausbildung der zweiten Übergabeeinrichtung 40 und der Fördervorrichtung 60 kann es vorteilhaft sein, dass die zweite Übergabeeinrichtung 40 um eine Längsachse des zweiten Arms 46 geschwenkt wird, um das Einführen der Blisterpackung 2 in die Aufnahmen der Fördervorrichtung 60 zu ermöglichen.

Schließlich wird die bewegte Blisterpackung 2 in der Ablageposition 50 auf die Fördervorrichtung 60 abgelegt. Ist die Blisterpackung 2 auf der Fördervorrichtung 60 abgelegt, bewegt sich die zweite Übergabeeinrichtung 40 zurück zur Aufnahmeposition 38, um eine weitere Blisterpackung 2 aufzunehmen. Zwischenzeitlich bewegt sich die Zwischenablage 30 in Längsrichtung L. Die Zwischenablage 30 bewegt sich während der Übergabe einer Blisterpackung 2 von der Zwischenablage 30 an die Fördervorrichtung 60 jeweils so weit in Längsrichtung L, dass eine weitere sich auf der Zwischenablage 30 befindende Blisterpackung 2 in der Aufnahmeposition 38 angeordnet wird. Auf diese Weise steht stets, wenn sich die zweite Übergabeeinrichtung 40 zurück zur Aufnahmeposition 38 bewegt, eine nächste Blisterpackung 2 in der Aufnahmeposition 38 bereit. Diese Blisterpackung 2 in der Aufnahmeposition 38 wird dann entsprechend von der zweiten Übergabeeinrichtung 40 aufgenommen und von der Aufnahmeposition 38 in die Ablageposition 50 bewegt.

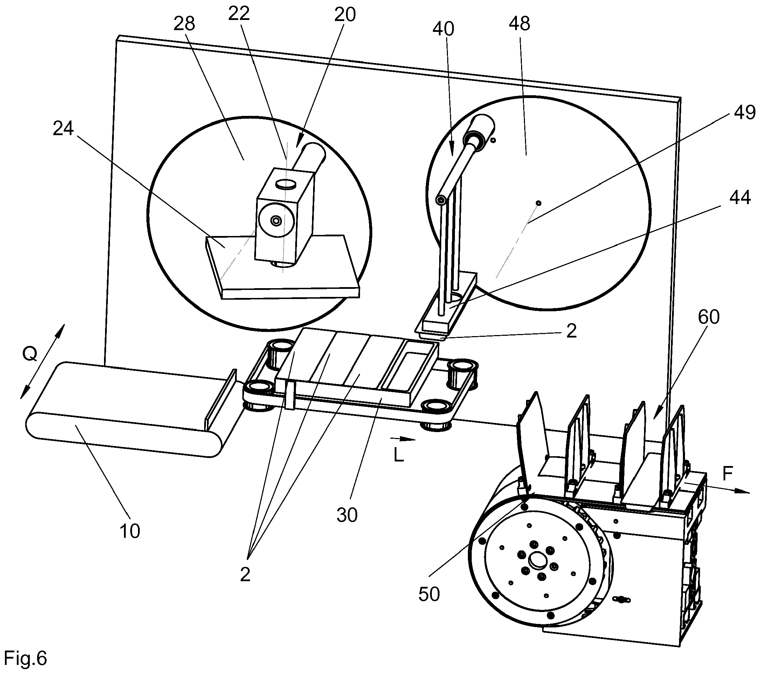

In den Fig. 6 bis 9 ist zu sehen, dass zunächst eine erste Blisterpackung 2, dann eine zweite Blisterpackung 2, eine dritte und schließlich eine vierte Blisterpackung 2 von der Zwischenablage 30 an die Fördervorrichtung 60 übergeben wird. Die Zwischenablage 30 wird jeweils um eine vorbestimmte Distanz in Längsrichtung L bewegt. Die vorbestimmte Distanz ergibt sich dabei aus dem Abstand der Längsachsen von zwei nebeneinander angeordneten Blisterpackungen 2. Es versteht sich, dass die Blisterpackungen 2 alternativ in jeder beliebigen Reihenfolge von der Zwischenablage 30 an die Fördervorrichtung 60 übergeben werden können. Im dargestellten Ausführungsbeispiel wird zunächst die der Fördervorrichtung 60 in Längsrichtung L am nächsten angeordnete Blisterpackung 2 übergeben und anschließend der Reihe nach jede weitere der in Längsrichtung L hintereinander angeordneten Blisterpackungen 2. Es ist aber auch möglich, zunächst die von der Fördervorrichtung 60 in Längsrichtung L am weitesten entfernte Blisterpackung 2 zu übergeben. In diesem Fall bewegt sich die Zwischenablage 30 zwischen dem Aufnehmen der einzelnen Blisterpackungen 2 durch die zweite Übergabeeinrichtung 40 entgegen der Längsrichtung L.

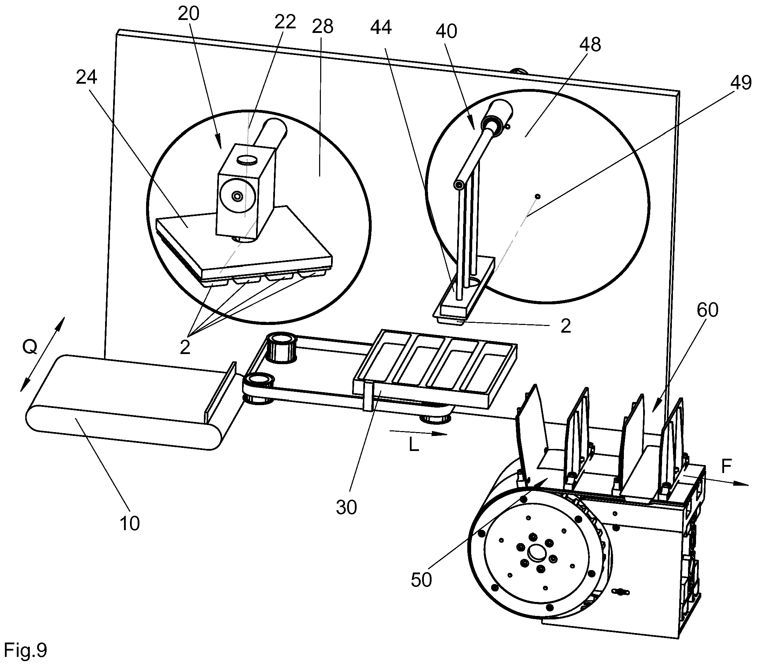

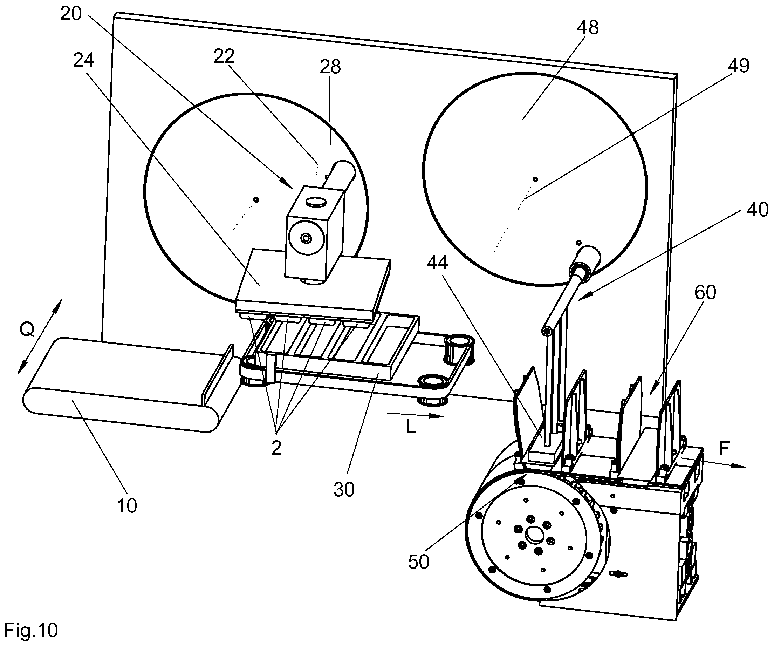

Während der Übergabe der einzelnen Blisterpackungen 2 von der Zwischenablage 30 an die Fördervorrichtung 60 befindet sich die erste Übergabeeinrichtung 20 in einer Warteposition zwischen dem Ablagebereich 14 und dem Aufnahmebereich 12. Vorzugsweise befindet sich die erste Übergabeeinrichtung 20 unmittelbar in oder über dem Aufnahmebereich 12 und es wird eine nächste Mehrzahl von Blisterpackungen 2 im Aufnahmebereich 12 bereitgestellt. Um die Leistung der Maschine zu erhöhen, ist es vorteilhaft, wenn die erste Übergabeeinrichtung 20 bereits eine neue Mehrzahl von Blisterpackungen 2 aufnimmt und vom Aufnahmebereich 12 in den Ablagebereich 14 bewegt, während die zweite Übergabeeinrichtung 40 noch eine letzte Blisterpackung 2 aus dem vorhergehenden Übergabezyklus an die Fördervorrichtung 60 übergibt, wie in den Fig. 9 und 10 zu sehen ist. Beispielsweise kann vorgesehen sein, dass die Zwischenablage 30 sich unmittelbar nach Entnahme der letzten auf ihr befindenden Blisterpackung 2 entgegen der Längsrichtung L in den Ablagebereich 14 bewegt. Im Ablagebereich 14 kann die Zwischenablage 30 dann unmittelbar eine neue Mehrzahl von Blisterpackungen 2 aufnehmen. Hierzu kann die erste Übergabeeinrichtung 20 entweder bereits in einer Wartestellung über dem Ablagebereich 14 auf die Zwischenablage 30 warten. Alternativ sind die Bewegung der ersten Übergabeeinrichtung 20 und der Zwischenablage 30 so abgestimmt, dass die Zwischenablage 30 bereitsteht, wenn sich die erste Übergabeeinrichtung 20 dem Ablagebereich 14 im Wesentlichen kontinuierlich bewegend annähert. Einzelne Übergabezyklen können infolgedessen unmittelbar aneinander anschließen. Es ist bevorzugt, dass die erste Übergabeeinrichtung 20 und die zweite Übergabeeinrichtung 40 die Blisterpackungen 2 jeweils kontinuierlich von dem Aufnahmebereich 12 in den Ablagebereich 14 bzw. von der Aufnahmeposition 38 in die Ablageposition 50 bewegen.

In der in den Figuren dargestellten Ausführungsform des erfindungsgemäßen Verfahrens wird die Fördervorrichtung 60 nach jedem Ablegen einer Blisterpackung 2 auf der Fördervorrichtung 60 in Förderrichtung F weiterbewegt, getaktet oder unter Umständen kontinuierlich. Die Bildung von Stapeln von Blisterpackungen 2 ist bei kontinuierlicher Bewegung der Fördervorrichtung 60 nicht möglich. Sollte es gewünscht sein, auf der Fördervorrichtung Stapel von Blisterpackungen 2 zu bilden, so hat die Fördervorrichtung 60 während des Übergebens von mindestens zwei Blisterpackungen 2 von der Zwischenablage 30 an die Fördervorrichtung 60 stillzustehen. Die mindestens zwei Blisterpackungen 2 werden dadurch aufeinander abgelegt. Steht die Fördervorrichtung 60 für mehr als zwei Übergaben von Blisterpackungen 2 von der Zwischenablage 30 an die Fördervorrichtung 60 still, können auf diese Weise Stapel von Blisterpackungen 2 beliebiger Höhe gebildet werden.

## Patentansprüche

1. Verfahren zum Übergeben von Blisterpackungen (2) an eine Fördervorrichtung (60) mit den Schritten:
a) Bereitstellen einer Mehrzahl von Blisterpackungen (2) in einem stationären Aufnahmebereich (12), in dem die Mehrzahl von Blisterpackungen (2) in einer Querrichtung (Q), die sich quer zu einer Förderrichtung (F) der Fördervorrichtung (60) erstreckt, nebeneinander angeordnet ist;
b) Aufnehmen der Mehrzahl von Blisterpackungen (2) mit einer ersten Übergabeeinrichtung (20) im Aufnahmebereich (12);
c) gemeinsames Bewegen der Mehrzahl von Blisterpackungen (2) mittels der ersten Übergabeeinrichtung (20) vom Aufnahmebereich (12) in einen stationären Ablagebereich (14);
d) gemeinsames Drehen der Mehrzahl von Blisterpackungen (2) um eine Drehachse (22), die senkrecht zur Förderrichtung (F) und zur Querrichtung (Q) ausgerichtet ist, während des Bewegens der Mehrzahl von Blisterpackungen (2) vom Aufnahmebereich (12) in den Ablagebereich (14);
e) Ablegen der Mehrzahl von Blisterpackungen (2) im Ablagebereich (14) auf einer Zwischenablage (30);
f) Anordnen einer Blisterpackung (2) aus der Mehrzahl von Blisterpackungen (2) in einer stationären Aufnahmeposition (38);
g) Aufnehmen der sich in der Aufnahmeposition (38) befindenden Blisterpackung (2) mit einer zweiten Übergabeeinrichtung (40);
h) Bewegen der aufgenommenen Blisterpackung (2) mittels der zweiten Übergabeeinrichtung (40) von der Aufnahmeposition (38) in eine stationäre Ablageposition (50);
i) Ablegen der bewegten Blisterpackung (2) in der Ablageposition (50) auf die Fördervorrichtung (60); und
j) Wiederholen der Schritte f) bis i) für jede weitere aus der Mehrzahl von Blisterpackungen (2), wobei das Anordnen der Blisterpackungen (2) gemäß Schritt f) jeweils durch Bewegen der Zwischenablage (30) in einer Längsrichtung (L), die sich parallel zur Förderrichtung (F) der Fördervorrichtung (60) erstreckt, erfolgt.

2. Verfahren nach Anspruch 1, **dadurch gekennzeichnet, dass** das Anordnen einer Blisterpackung (2) gemäß Schritt f) auch bei der ersten der Mehrzahl von Blisterpackungen (2) durch Bewegen der Zwischenablage (30) in Längsrichtung (L) erfolgt.

3. Verfahren nach Anspruch 1 oder 2, **dadurch gekennzeichnet, dass** die Fördervorrichtung (60) während des Wiederholens der Schritte f) bis i) für zumindest eine weitere aus der Mehrzahl von Blisterpackungen (2) stillsteht, sodass auf der Fördervorrichtung (60) ein Stapel von Blisterpackungen (2) gebildet wird.

4. Verfahren nach einem der vorangehenden Ansprüche, **dadurch gekennzeichnet, dass** das Bereitstellen der Mehrzahl von Blisterpackungen (2) im stationären Aufnahmebereich (12) gemäß Schritt a) durch eine Zuführvorrichtung (10), vorzugsweise ein getaktet betriebenes Förderband, erfolgt.

5. Verfahren nach Anspruch 4, **dadurch gekennzeichnet, dass** die Zuführvorrichtung (10) und die Fördervorrichtung (60) in Längsrichtung (L) zueinander ausgerichtet sind, sodass die erste Übergabeeinrichtung (20), die Zwischenablage (30) und die zweite Übergabeeinrichtung (40) die Mehrzahl von Blisterpackungen (2) nach dem Drehen der Mehrzahl von Blisterpackungen (2) gemäß Schritt d) ohne Versatz in Querrichtung (Q) bewegen.

6. Verfahren nach einem der vorangehenden Ansprüche, **dadurch gekennzeichnet, dass** die erste und die zweite Übergabeeinrichtung (20, 40) als Greifer oder als Saugvorrichtungen ausgebildet sind.

7. Verfahren nach einem der vorangehenden Ansprüche, **dadurch gekennzeichnet, dass** die Mehrzahl von Blisterpackungen (2) im Aufnahmebereich (12) derart angeordnet ist, dass sich die Blisterpackungen (2) in der Längsrichtung (L) mindestens genauso weit erstrecken wie in Querrichtung (Q).

8. Verfahren nach Anspruch 7, **dadurch gekennzeichnet, dass** die Mehrzahl von Blisterpackungen (2) im Ablagebereich (14) derart angeordnet ist, dass sich die Blisterpackungen (2) in Querrichtung (Q) mindestens genauso weit erstrecken wie in Längsrichtung (L).

9. Verfahren nach einem der vorangehenden Ansprüche, **dadurch gekennzeichnet, dass** das Drehen der Mehrzahl von Blisterpackungen (2) gemäß Schritt d) eine Drehung der Mehrzahl von Blisterpackungen (2) um 90° bzw. 270° um die Drehachse (22) umfasst.

10. Verfahren nach einem der vorangehenden Ansprüche, **dadurch gekennzeichnet, dass** das Bewegen der Zwischenablage (30) gemäß Schritt f) durch eine Antriebseinrichtung (70) erfolgt.

11. Verfahren nach Anspruch 10, **dadurch gekennzeichnet, dass** die Antriebseinrichtung (70) einen Riemenantrieb (72) umfasst.

12. Verfahren nach einem der vorangehenden Ansprüche, **dadurch gekennzeichnet, dass** sich die erste Übergabeeinrichtung (20) im Wesentlichen auf einer Kreisbahn bewegt, deren Mittelachse vorzugsweise parallel zur Querrichtung (Q) ausgerichtet ist.

13. Verfahren nach Anspruch 12, **dadurch gekennzeichnet, dass** die Bewegung der ersten Übergabeeinrichtung (20) auf der Kreisbahn mit der Drehbewegung der Mehrzahl von Blisterpackungen (2) gemäß Schritt d) derart gekoppelt ist, dass die Bewegung der ersten Übergabeeinrichtung (20) auf der Kreisbahn die Drehbewegung der Mehrzahl von Blisterpackungen (2) gemäß Schritt d) bewirkt.

14. Verfahren nach einem der vorangehenden Ansprüche, **dadurch gekennzeichnet, dass** sich die zweite Übergabeeinrichtung (40) im Wesentlichen auf einer Kreisbahn bewegt, deren Mittelachse vorzugsweise parallel zur Querrichtung (Q) ausgerichtet ist.

15. Verfahren nach einem der vorangehenden Ansprüche, **dadurch gekennzeichnet, dass** sich die Zwischenablage (30) nach Schritt j) zurück zum Aufnahmebereich (12) bewegt, um eine neue Mehrzahl von Blisterpackungen (2) aufzunehmen.

## Claims

1. Method for transferring blister packs (2) to a conveying device (60), with the steps:
a) setting up a plurality of blister packs (2) in a stationary receiving area (12) in which the plurality of blister packs (2) are arranged side by side in a transverse direction (Q) which extends transversely to a conveying direction (F) of the conveying device (60);
b) taking up the plurality of blister packs (2) with a first transferring unit (20) in the receiving area (12);
c) moving the plurality of blister packs (2) in unison by means of the first transferring unit (20) from the receiving area (12) into a stationary storage area (14);
d) rotating the plurality of blister packs (2) in unison about an axis of rotation (22) which is oriented perpendicularly to the conveying direction (F) and to the transfer direction (Q) whilst moving the plurality of blister packs (2) from the receiving area (12) into the storage area (14);
e) depositing the plurality of blister packs (2) in the storage area (14) on an intermediate rack (30);
f) arranging one blister pack (2) from the plurality of blister packs (2) in a stationary receiving position (38);
g) taking up the blister pack (2) located in the receiving position (38) by a second transferring unit (40);
h) moving the received blister pack (2) by means of the second transferring unit (40) from the receiving position (38) into a stationary storage position (50);
i) depositing the moved blister pack (2) in the storage position (50) onto the conveying device (60); and
j) repeating steps f) to i) for each further pack from the plurality of blister packs (2), wherein arranging the blister packs (2) according to step f) takes place in each case by moving the intermediate rack (30) in a longitudinal direction (L) which extends parallel to the conveying direction (F) of the conveying device (60).

2. Method according to claim 1 **characterised in that** arranging a blister pack (2) according to step f) is also carried out in the case of the first of the plurality of blister packs (2) by moving the intermediate rack (30) in the longitudinal direction (L).

3. Method according to claim 1 or 2 **characterised in that** the conveying device (60) is stationary whilst repeating steps f) to i) for at least one further pack of the plurality of blister packs (2) so that a stack of blister packs (2) is formed on the conveying device (60).

4. Method according to one of the preceding claims **characterised in that** setting up the plurality of blister packs (2) in the stationary receiving area (12) according to step a) is carried out by a supply device (10), preferably a rhythmically operated conveyor belt.

5. Method according to claim 4 **characterised in that** the supply device (10) and the conveying device (60) are oriented relative to one another in the longitudinal direction (L) so that the first transferring unit (20), the intermediate rack (30) and the second transferring unit (40) move the plurality of blister packs (2) after rotating the plurality of blister packs (2) according to step d) without any stagger in the transverse direction (Q).

6. Method according to one of the preceding claims **characterised in that** the first and the second transferring units (20, 40) are designed as grippers or as suction devices.

7. Method according to one of the preceding claims characterised that the plurality of blister packs (2) are arranged in the receiving area (12) in such a way that the blister packs (2) extend at least as far in the longitudinal direction (L) as in the transverse direction (Q).

8. Method according to claim 7 **characterised in that** the plurality of blister packs (2) is arranged in the storage area (14) in such a way that the blister packs (2) extend at least as far in the transverse direction (Q) as in the longitudinal direction (L).

9. Method according to one of the preceding claims **characterised in that** rotating the plurality of blister packs (2) according to step d) comprises rotating the plurality of blister packs (2) 90° or 270° around the axis of rotation (22).

10. Method according to one of the preceding claims **characterised in that** moving the intermediate rack (30) according to step f) is carried out by a drive mechanism (70).

11. Method according to claim 10 **characterised in that** the drive mechanism (70) is a belt drive (72).

12. Method according to one of the preceding claims **characterised in that** the first transferring device (20) is moved substantially on a circular path whose centre axis is oriented preferably parallel to the transverse direction (Q).

13. Method according to claim 12 **characterised in that** moving the first transferring device (20) on the circular path is coupled with the rotational movement of the plurality of blister packs (2) according to step d) in such a way that the movement of the first transferring unit (20) on the circular path causes the rotational movement of the plurality of blister packs (2) according to step d).

14. Method according to one of the preceding claims **characterised in that** the second transferring unit (40) is moved substantially on a circular path whose centre axis is oriented preferably parallel to the transverse direction (Q).

15. Method according to one of the preceding claims **characterised in that** the intermediate rack (30) is moved after step j) back to the receiving area (12) in order to receive a new plurality of blister packs (2).

## Revendications

1. Procédé pour le transfert d'emballages blister (2) à un dispositif de transport (60) comportant les opérations consistant à :
a) approvisionner de multiples emballages blister (2) dans une zone de préhension (12) fixe, dans laquelle les multiples emballages blister (2) sont disposés l'un à côté de l'autre suivant une direction transversale (Q), qui s'étend transversalement à une direction de transport (F) du dispositif de transport (60) ;
b) prendre les multiples emballages blister (2) au moyen d'un premier dispositif de transfert (20) dans la zone de préhension (12) ;
c) déplacer en commun, jusque dans une zone de dépôt (14) fixe, les multiples emballages blister (2) au moyen du premier dispositif de transfert (20), à partir de la zone de préhension (12) ;
d) pendant le déplacement des multiples emballages blister (2) jusque dans la zone de dépôt (14) à partir de la zone de préhension (12), faire tourner en commun les multiples emballages blister (2) autour d'un axe de rotation (22) qui est orienté perpendiculairement à la direction de transport (F) et à la direction transversale (Q) ;
e) déposer les multiples emballages blister (2), dans la zone de dépôt (14), sur un élément de dépôt intermédiaire (30) ;
f) placer un emballage blister (2), parmi les multiples emballages blister (2), dans une position de préhension (38) fixe ;
g) prendre l'emballage blister (2) se trouvant dans la position de préhension (38), au moyen d'un second dispositif de transfert (40) ;
h) à partir de la position de préhension (38), déplacer jusque dans une position de dépôt (50) fixe, au moyen du second dispositif de transfert (40), l'emballage blister (2) qui a été pris;
i) dans la position de dépôt (50), déposer l'emballage blister (2), qui a été déplacé, sur le dispositif de transport (60) ; et
j) répéter les opérations f) à i) pour chaque autre emballage parmi la multiplicité d'emballages blister (2), le placement des emballages blister (2) selon l'opération f) ayant lieu chaque fois par le déplacement de l'élément de dépôt intermédiaire (30) suivant une direction longitudinale (L), qui s'étend parallèlement à la direction de transport (F) du dispositif de transport (60).

2. Procédé suivant la revendication 1, **caractérisé en ce que** le placement d'un emballage blister (2) selon l'opération f) a lieu également, dans le cas du premier emballage parmi les multiples emballages blister (2), par déplacement de l'élément de dépôt intermédiaire (30) suivant la direction longitudinale (L).

3. Procédé suivant la revendication 1 ou 2, **caractérisé en ce que**, pendant la répétition des opérations f) à i), pour au moins un autre emballage parmi les multiples emballages blister (2), le dispositif de transport (60) est à l'arrêt, de sorte qu'une pile d'emballages blister (2) est formée sur le dispositif de transport (60).

4. Procédé suivant l'une des revendications précédentes, **caractérisé en ce que** l'approvisionnement des multiples emballages blister (2) dans la zone de préhension (12) fixe selon l'opération a) a lieu au moyen d'un dispositif d'alimentation (10), de préférence une bande transporteuse entraînée par impulsions.

5. Procédé suivant la revendication 4, **caractérisé en ce que** le dispositif d'alimentation (10) et le dispositif de transport (60) sont orientés l'un vis-à-vis de l'autre suivant la direction longitudinale (L), de façon telle qu'après la rotation des multiples emballages blister (2) selon l'opération d), le premier dispositif de transfert (20), l'élément de dépôt intermédiaire (30) et le second dispositif de transfert (40) déplacent les multiples emballages blister (2) sans décalage suivant la direction transversale (Q).

6. Procédé suivant l'une des revendications précédentes, **caractérisé en ce que** le premier et le second dispositifs de transfert (20, 40) sont réalisés sous forme de pinces ou sous forme de dispositifs d'aspiration.

7. Procédé suivant l'une des revendications précédentes, **caractérisé en ce que** les multiples emballages blister (2) sont disposés dans la zone de préhension (12) de façon telle que les emballages blister (2) s'étendent suivant la direction longitudinale (L) suivant au moins exactement la même étendue que suivant la direction transversale (Q).

8. Procédé suivant la revendication 7, **caractérisé en ce que** les multiples emballages blister (2) sont disposés dans la zone de dépôt (14) de façon telle que les emballages blister (2) s'étendent suivant la direction transversale (Q) suivant au moins exactement la même étendue que suivant la direction longitudinale (L).

9. Procédé suivant l'une des revendications précédentes, **caractérisé en ce que** la rotation des multiples emballages blister (2) suivant l'opération d) comprend une rotation des multiples emballages blister (2) de respectivement 90° ou 270° autour de l'axe de rotation (22).

10. Procédé suivant l'une des revendications précédentes, **caractérisé en ce que** le déplacement de l'élément de dépôt intermédiaire (30) suivant l'opération f) a lieu au moyen d'un dispositif d'entraînement (70).

11. Procédé suivant la revendication 10, **caractérisé en ce que** le dispositif d'entraînement (70) comprend un entraînement à courroie (72).

12. Procédé suivant l'une des revendications précédentes, **caractérisé en ce que** le premier dispositif de transfert (20) se déplace essentiellement suivant une trajectoire circulaire, dont l'axe est orienté de préférence parallèlement à la direction transversale (Q).

13. Procédé suivant la revendication 12, **caractérisé en ce que** le déplacement du premier dispositif de transfert (20) suivant la trajectoire circulaire est couplé au déplacement de rotation des multiples emballages blister (2) suivant l'opération d) de façon telle que le déplacement du premier dispositif de transfert (20) suivant la trajectoire circulaire provoque le déplacement de rotation des multiples emballages blister (2) suivant l'opération d).

14. Procédé suivant l'une des revendications précédentes, **caractérisé en ce que** le second dispositif de transfert (40) se déplace essentiellement suivant une trajectoire circulaire, dont l'axe est orienté de préférence parallèlement à la direction transversale (Q).

15. Procédé suivant l'une des revendications précédentes, **caractérisé en ce qu'**après l'opération j), l'élément de dépôt intermédiaire (30) se déplace en retour vers la zone de préhension (12), afin de prendre une nouvelle multiplicité d'emballages blister (2).
